Europäisches Patentamt

(19) European Patent Office

Office européen des brevets

(11) Publication number: 0 364 192 A2

# (12) EUROPEAN PATENT APPLICATION

(21) Application number: 89310306.9

(51) Int. Cl.⁵: **B62J 1/08**

(22) Date of filing: 09.10.89

(30) Priority: 12.10.88 US 256660
12.12.88 US 282603
04.08.89 US 389751

(43) Date of publication of application:
18.04.90 Bulletin 90/16

(84) Designated Contracting States:
AT CH DE FR GB IT LI

(71) Applicant: Schilplin, Frederick C.
Route 3
Annandale Minnesota 55302(US)

(72) Inventor: Schilplin, Frederick C.
Route 3
Annandale Minnesota 55302(US)
Inventor: Anderson, Brian L.
2710, N. Dale No. 115
Roseville Minnesota 55113(US)

(74) Representative: Miller, Joseph et al
J. MILLER & CO. Lincoln House 296-302 High
Holborn
London WC1V 7JH(GB)

(54) Clamp assembly for clamping a seat in position.

(57) A clamp assembly for clamping a seat (32) in position comprising a post (18) to one end of which there is secured a clamp tube (20) whose axis is substantially perpendicular to that of the post (18); a clamp device (22) which is mounted in the clamp tube (20) and which has a plurality of separate parts (24,26,28) between which seat support means (30) may be disposed; and clamp means (34) for clamping the separate parts (24,26,28) together so as to clamp the seat support means (30) therebetween and simultaneously to clamp the clamp device (22) as a whole to the clamp tube (20).

**FIGURE 2**

## CLAMP ASSEMBLY FOR CLAMPING A SEAT IN POSITION

This invention concerns a clamp assembly for clamping a seat, such for example as a bicycle seat, in position.

As in most accessories designed for bicycle use, seat post clamps for attaching the seat of the bicycle to a seat post have heretofore been formed of a complicated casting which is relatively complicated and expensive to manufacture and which is not all that easily adjusted by the owner/rider. Such clamps are typified by the construction shown in US-A-4,142,813.

According to the present invention, there is provided a clamp assembly for clamping a seat in position comprising a post to one end of which there is secured a clamp tube whose axis is substantially perpendicular to that of the post; a clamp device which is mounted in the clamp tube and which has a plurality of separate parts between which seat support means may be disposed; and clamp means for clamping the separate parts together so as to clamp the seat support means therebetween and simultaneously to clamp the clamp device as a whole to the clamp tube.

Preferably the construction is such that, when the clamp means are operated to effect the said clamping, the effective outer diameter of at least a portion of the clamp device is increased so as to force it into clamping contact with the internal surface of the clamp tube.

Thus each of said separate parts may have a wedging surface which is engageable with a wedging surface of one of the other separate parts or with the seat support means, each said wedging surface extending obliquely with respect to the axis of the clamp tube. Each wedging surface is preferably a planar surface extending from an end of the clamp device to a central part of the outer circumference of the latter.

The clamp means may be constituted by a single bolt which passes through holes in the separate parts.

In one construction, the clamp tube has an axially extending slot therein which extends between opposite ends of the clamp tube, the clamp means when operated reducing the effective internal diameter of the clamp tube.

The assembly may also comprise a seat provided with seat support means disposed between the said separate parts.

The seat support means may comprise two substantially parallel seat mounting rails.

At least some of the planar surfaces may be provided with grooves in which the seat mounting rails are disposed.

The grooves are preferably substantially perpendicular to the axis of the clamp tube.

In its preferred form, the clamp assembly of the present invention may be easily and inexpensively manufactured, e.g. from common materials, and may easily be adjusted by a rider of a bicycle provided with such a clamp assembly.

The clamp tube may be constituted by a simple piece of round tubing which is welded or otherwise permanently attached perpendicularly to the top of the said post. The clamp device may comprise a piece of cylindrical rod having a diameter slightly less than the inside diameter of the clamp tube, the said piece being sliced into three sections.

Two wedge-like clamping sections may be formed in the said piece by making two cuts therein each of which runs from the central part of the circumference of the rod to terminate at an end of the rod near a diameter thereof, thus forming two wedge-like clamping sections and a main section. The three pieces may then be axially drilled to provide holes through which passes a bolt, the holes having a slightly larger diameter than that of the bolt. Two parallel grooves generally perpendicular to the axis of the rod may be provided in the cut surfaces on the main section for accommodating two parallel rails of the seat.

Thus, when the bolt is placed through all three sections and tightened, the seat rails will be tightened and clamped between the main section and the clamping sections and the wedging action of the clamping pieces moving inwardly on the main section will cause the effective outer circumference of the cylindrical rod to expand and grip the inside of the clamp tube at the top of the said post. Accordingly, by slightly loosening the bolt, both the angle of the seat and the fore-aft position of the seat may be easily adjusted.

In an alternative embodiment of the present invention, a two piece clamp device is made of identical parts and is drawn together by a bolt, thereby trapping the seat rails therebetween and expanding the clamp device to grip the inside of the clamp tube.

In another alternative embodiment of the present invention, a two piece clamp device clamps the seat rails therebetween. The clamp tube has a longitudinally oriented split and a suitable clamp means which decreases the internal diameter of the clamp tube to grip the clamp device.

In yet another alternative embodiment of the present invention, a single wedge clamp device clamps the seat rails with the assistance of a keeper at the non-wedge end of the clamp device and is drawn together by a bolt, thereby trapping the seat rails and expanding the clamp device to grip the inside of the clamp tube.

The invention is illustrated, merely by way of example, in the accompanying drawings wherein like reference numerals refer to the same or similar parts throughout the several views, and in which:-

Figure 1 is a diagrammatic view of a bicycle provided with a clamp assembly according to the present invention;

Figure 2 shows an exploded view of a first embodiment of a clamp assembly according to the present invention;

Figure 3 shows a second embodiment of a clamp assembly according to the present invention;

Figure 4 shows a third embodiment of a clamp assembly according to the present invention;

Figure 5 shows a fourth embodiment of a clamp assembly according to the present invention;

Figure 6 shows a fifth embodiment of a clamp assembly according to the present invention; and

Figure 7 shows a cross-sectional view of a clamp tube used in the embodiment of Figure 6.

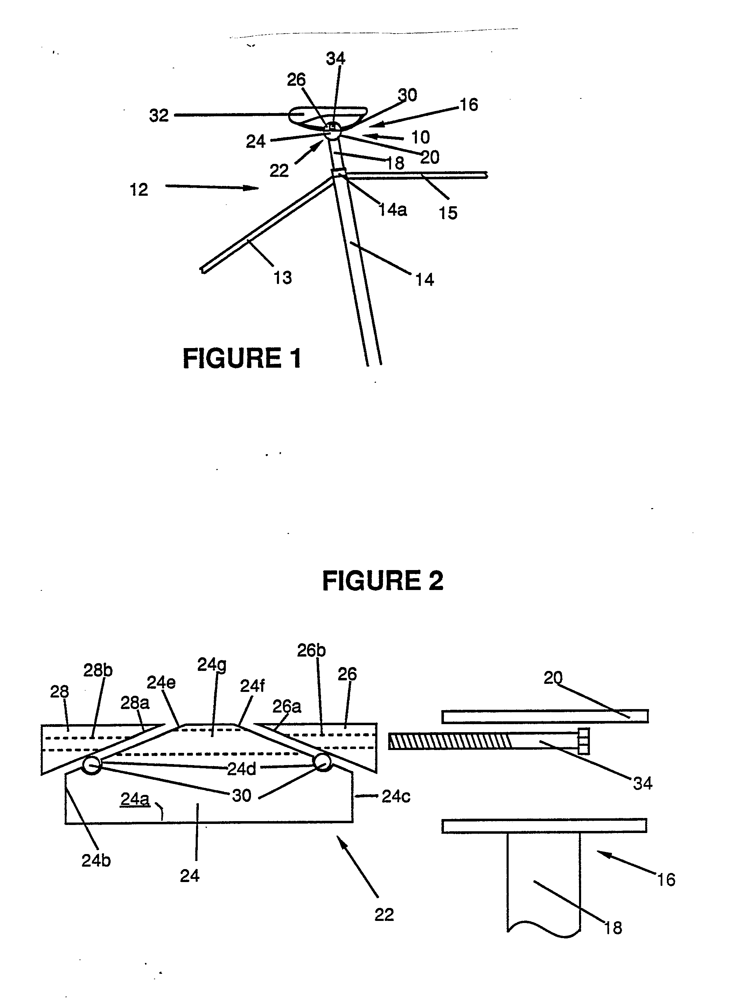

In Figure 1 there is shown a bicycle 12 provided with a clamp assembly 10 according to the present invention, the clamp assembly being provided for clamping a seat 32 in position. The clamp assembly comprises a seat post 18 which is adjustably mounted in a seat tube 14 having a clamp 14a at the top thereof by means of which the seat post 18 is clamped to the seat tube 14. The seat tube 14 is supported by a seat stay tube 13 and a top tube 15. The seat post 18 has a clamp tube 20 which is attached perpendicularly to the top of the seat post 18 by welding or other conventional joining technique. Thus the axis of the clamp tube 20 is substantially perpendicular to that of the post 18. A clamp device 22 (best seen in Figure 2) is mounted in the clamp tube 20 and is formed from a piece of cylindrical rod which is cut into three separate parts or sections; a main section 24 and clamping sections 26 and 28.

As can be seen in Figure 2, two cuts run from each end 24b and 24c of the main section 24 to the outer circumference 24a of the main section 24 adjacent the central part thereof. As a result, planar wedging surfaces 24e, 24f are formed on the main section 24 and planar wedging surfaces 26a, 28a are formed on the clamping sections 26, 28, each wedging surface being engageable with the adjacent wedging surface and extending obliquely with respect to the axis of the clamp tube 20. Two grooves 24d are formed in the wedging surfaces 24e and 24f to accommodate and clamp seat mounting and support rails 30 of the seat 32. The rails 30 are substantially parallel to each other and are disposed between the sections 24, 26 and 24, 28, the grooves 24d being substantially perpendicular to the axis of the clamp tube 20.

A bolt or other fastening member 34 is inserted through holes 28b, 24g and 26b in the clamping section 28, the main section 24 and the clamping section 26 respectively, the hole 28b being threaded. At least the hole 24g has a diameter greater than that of the bolt 34 so that when the bolt 34 is tightened, the wedging action of the clamping sections 26 and 28 on the main section 24 serves to clamp the seat rails 30 in the grooves 24d and also simultaneously serves to expand the outer diameter of the clamp device 22 to snugly engage and clamp against the inside of the clamp tube 20, thereby fixing the angle of the seat 32 relative to the seat post 18 as well as the fore-aft position of the seat 32 relative to the seat post 18 and the bicycle frame. The hole 24g may also have a cross-section of an upwardly facing U-shaped slot such that the open side of the slot extends through the upper surface of the main section 24.

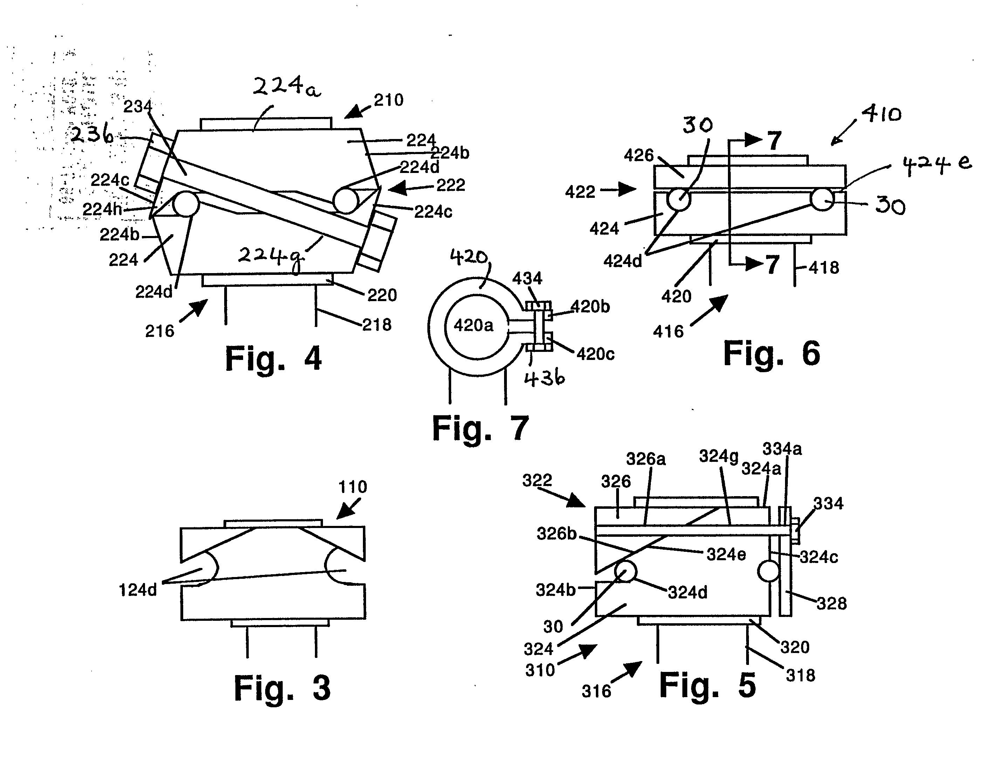

A second embodiment 110 is shown in Figure 3. The Figure 3 embodiment is quite similar to the Figure 1 and 2 embodiment and operates in a generally similar fashion with the exception that slots 124d, which correspond to slots 24d of Figure 2, open axially outwardly rather than upwardly.

A third embodiment of the present invention is shown in Figure 4 and is generally designated 210. Inserted into the seat tube 14 of a conventional bicycle such as that shown in Figure 1 is a seat post member 216 comprised of a seat post 218 and a clamp tube 220 which is attached perpendicularly to the top of the seat post 218 by welding or other conventional joining technique.

A clamp device 222, which is disposed in the clamp tube 220, is formed from two, preferably identical, members 224 which are formed by machining, casting, forging or other conventional manufacturing techniques. Each member 224 has a rail slot end 224b, a wedge end 224c and a circumference 224a. A slot 224d is formed in the rail slot end 224b to accommodate and clamp a respective seat rail 30 of the seat 32.

A bolt or either fastening member 234 is inserted through holes 224g in the clamping members 224, the hole 224g in one of the clamping members 224 being threaded if desired rather than utilizing a nut 236. When the bolt 234 is tightened, the wedging action of wedge sections 224h on the seat rails 30 disposed in the grooves 224d clamps the seat rails 30 and also simultaneously serves to expand the outer diameter of the clamp device 222 to snugly engage and clamp against the inside of the clamp tube 220, thereby fixing the angle of the seat 32 relative to seat post 218 as well as the fore-aft position of the seat 32 relative to the seat post 218 and the bicycle frame.

A fourth embodiment of the present invention is shown in Figure 5 and is generally designated 310. Inserted into the seat tube 14 of a conventional bicycle such as that shown in Figure 1 is a seat post member 316 comprising a seat post 318 and a clamp tube 320 which is attached perpendicularly to the top of the seat post 318 by welding or other conventional joining technique.

A clamp device 322 is disposed in the clamp tube 320 and is formed from three members 324, 326, 328. Main member 324 is generally cylindrical in nature and has a portion cut off (or formed by other conventional manufacturing techniques) to produce wedge 326. The member 324 has a rail slot end 324b, a keeper end 324c, and an outer circumference 324a. Slots 324d are formed in the rail slot end 324b and the keeper end 324c to accommodate and clamp the seat rails 30 of the seat 32. Keeper 328 can be formed from a washer or similar piece.

A bolt or other fastening member 334 is inserted through holes 334a, 324g and 326a in keeper 328 and clamping members 324 and 326 respectively. The hole 326a in the member 326 may be threaded if desired. When the bolt 334 is tightened, the wedging action of a wedge surface 326b of the wedge 326 on a wedge surface 324c of the clamping member 324 clamps one of seat rails 30 in one groove 324d while the keeper 328 clamps the other seat rail 30 into the other slot 324d and also simultaneously serves to expand the outer diameter of the clamp device 322 to snugly engage and clamp against the inside of the clamp tube 320, thereby fixing the angle of the seat 32 relative to seat post 318 as well as the fore-aft position of the seat 32 relative to the seat post 318 and the bicycle frame.

A fifth embodiment of the present invention is shown in Figures 6 and 7 and is generally designated 410. Inserted into the seat tube 14 of a conventional bicycle such as that shown in Figure 1 is a seat post member 416 comprised of a seat post 418 and a clamp tube 420 which is attached perpendicularly to the top of seat post 418 by welding or other conventional joining technique. An axially extending slot 420a is cut along one side of tube 420 so as to extend between opposite ends of the clamp tube 420. The slot 420a has located on either side thereof ears 420b and 420c. This construction may also be formed by making the clamp tube 420 as an extrusion.

A clamp device 422 which is disposed in the clamp tube 420 is formed from two members 424 and 426 which are formed by machining, casting, forging or other conventional manufacturing techniques. The member 424 has an outer circumference 424a. Two slots 424d are formed in a face 424e of the member 424 to accommodate and clamp the seat rails 30 of the seat 32. The member 426 is constituted by a keeper which is formed by slicing off a portion of member 424 or otherwise.

A bolt or other fastening member 434 is inserted through holes in the ears 420b and 420c in the clamp tube 420. The hole in one of the ears may be threaded if desired or a nut 436 may be utilized. When the bolt 434 is tightened, the seat rails 30 are clamped in the grooves 424d and thus between the member 424 and the keeper 426. This clamping also serves simultaneously to contract the inner diameter of the clamp tube 420 to snugly engage and clamp the outside of the clamp device 422, thereby fixing the angle of the seat 32 relative to seat post 418 as well as the fore-aft position of the seat 32 relative to the seat post 418 and the bicycle frame.

## Claims

1. A clamp assembly for clamping a seat (32) in position comprising a post (18) to one end of which there is secured a clamp tube (20) whose axis is substantially perpendicular to that of the post (18); a clamp device (22) which is mounted in the clamp tube (20) and which has a plurality of separate parts (24,26,28) between which seat support means (30) may be disposed; and clamp means (34) for clamping the separate parts (24,26,28) together so as to clamp the seat support means (30) therebetween and simultaneously to clamp the clamp device (22) as a whole to the clamp tube (20).

2. A clamp assembly as claimed in claim 1 characterised in that the construction is such that, when the clamp means (34) are operated to effect the said clamping, the effective outer diameter of at least a portion of the clamp device (22) is increased so as to force it into clamping contact with the internal surface of the clamp tube (20).

3. A clamp assembly as claimed in claim 2 characterised in that each of said separate parts (24,26,28) has a wedging surface (24e, 24f, 26a, 28a) which is engageable with a wedging surface of one of the other separate parts or with the seat support means (30), each said wedging surface (24e, 24f, 26a, 28a) extending obliquely with respect to the axis of the clamp tube (20).

4. A clamp assembly as claimed in claim 3 characterised in that each wedging surface is a planar surface (24e, 24f, 26a, 28a) extending from an end (24b, 24c) of the clamp device (22) to a central part of the outer circumference of the latter.

5. A clamp assembly as claimed in any preceding claim characterised in that the clamp means is constituted by a single bolt (34) which passes through holes (24g, 26b, 28b) in the separate parts (24, 26, 28).

6. A clamp assembly as claimed in claim 1, or in claim 5 when dependent upon claim 1, characterised in that the clamp tube (420) has an axially extending slot (420a) therein which extends between opposite ends of the clamp tube (420), the clamp means (30) when operated reducing the effective internal diameter of the clamp tube (420).

7. A clamp assembly as claimed in any preceding claim characterised in that the assembly also comprises a seat (32) provided with seat support means (30) disposed between the said separate parts (24, 26, 28).

8. A clamp assembly as claimed in claim 7 characterised in that the seat support means (30) comprise two substantially parallel seat mounting rails (30).

9. A clamp assembly as claimed in claim 8 when dependent on claim 4 characterised in that at least some of the planar surfaces (24e, 24f, 26a, 28a) are provided with grooves (24d) in which the seat mounting rails (30) are disposed.

10. A clamp assembly as claimed in claim 9 characterised in that the grooves (24d) are substantially perpendicular to the axis of the clamp tube (20).

11. A seat post clamp assembly for use with a seat having generally parallel longitudinal mounting rails, said assembly comprising a seat post comprising: a post adjustably mountable in said seat tube; and a clamp tube having an axis and attached to one end of said post perpendicularly thereto; a clamp assembly formed from a generally cylindrical piece of material having a circumference and a center, said piece being cut into a main and two clamping sections by first and second cuts, each of said cuts forming a plane and planar surfaces passing through one end of said piece and terminating at the circumference of said piece adjacent the centre of said piece; and means for clamping said sections axially together in said clamp tube to increase the effective diameter of said clamping assembly.

12. A seat post clamp assembly for use with a bicycle having a seat tube for receiving a seat post and a seat having generally parallel longitudinal mounting rails, said assembly comprising: a seat post comprising: a post; and a one-piece clamp tube having first and second ends and an inner diameter and attached to one end of said post generally perpendicularly thereto having means for contracting the inner diameter of said clamp tube; a clamp assembly receiving said seat rails and comprising first and second members, at least one of said members having grooves for clampingly receiving said seat rails therebetween, the combination of said members having an outer diameter and being generally cylindrical and received in and insertable through either of said clamp tube ends, said outer diameter being generally less than said inner diameter of said clamping tube when said clamping tube is in a relaxed state.

13. A seat post clamp assembly for use with a bicycle having a seat tube for receiving a seat post and a seat having generally parallel longitudinal mounting rails, said assembly comprising: a seat post comprising: a post adjustably mountable in said seat tube; and a clamp tube having an axis and attached to one end of said post perpendicularly thereto; a clamp assembly formed from a generally cylindrical piece of material having a circumference and a centre, said piece being cut into main and keeper clamping sections with a cut, said cut forming a plane passing through one end of said piece and terminating at the circumference of said piece adjacent the centre of said piece; and means for clamping said sections axially together in said clamp tube.

**FIGURE 1**

**FIGURE 2**

**Fig. 4**

**Fig. 7**

**Fig. 6**

**Fig. 3**

**Fig. 5**

EP 0 364 192 A2

## DOCUMENTS CONSIDERED TO BE RELEVANT

EP 89310304.4

| Category | Citation of document with indication, where appropriate, of relevant passages | Relevant to claim | CLASSIFICATION OF THE APPLICATION (Int. Cl.4) |
|---|---|---|---|
| A | EP - A1 - 0 141 065 (BOSCH GMBH) * Abstract; claims 1,11 * -- | 1,6,7 | F 16 B 11/00 C 09 J 5/06 |
| A | DE - B2 - 1 704 131 (KOPPERS CO., INC.) * Claims 1,2; fig. 1 * -- | 1 | |
| A | GB - A - 1 315 373 (EX-PRESS PLASTICS LIMITED) * Claim 1; fig. 1 * -- | 1 | |
| A | US - A - 3 756 881 (S.A.DENMAN) * Abstract; fig. 1,2,3 * -- | 1 | |
| A | DE - A1 - 2 720 611 (ILLINOIS TOOL WORKS INC.) * Totality * -- | 1,3,6,7 | |
| A | EP - A1 - 0 163 348 (THORN EMI PLC) * Totality * ---- | 4,5 | TECHNICAL FIELDS SEARCHED (Int. Cl.4) B 29 C 65/00 C 09 J 5/00 F 16 B 5/00 F 16 B 11/00 F 16 B 12/00 F 23 D 14/00 H 01 K 1/00 H 05 B 6/00 |

The present search report has been drawn up for all claims

| Place of search | Date of completion of the search | Examiner |
|---|---|---|
| VIENNA | 29-12-1989 | RIEMANN |